# EUROPÄISCHE PATENTSCHRIFT

(11) **EP 2 757 229 B1**
(45) Veröffentlichungstag und Bekanntmachung des Hinweises auf die Patenterteilung: **12.08.2015**
(21) Anmeldenummer: 13000309.8
(22) Anmeldetag: 22.01.2013
(51) Int. Cl.: E21B 47/01, E21B 19/22, B05C 7/00, E21B 33/14, E21B 47/00

(54) **Messvorrichtung und Verfahren zum Überwachen einer Verfüllung eines Bohrlochs**
Measuring device and method for monitoring the filling of a borehole
Dispositif de mesure et procédé destiné à surveiller le colmatage d'un trou de forage

(43) Veröffentlichungstag der Anmeldung: 23.07.2014
(73) Patentinhaber: MAT Mischanlagentechnik GmbH, 87509 Immenstadt-Seifen (DE)
(72) Erfinder: Kleimeier, Manfred, 87527 Sonthofer (DE)
(74) Vertreter: Wunderlich, Rainer

(56) Entgegenhaltungen:
- WO-A1-01/07754
- WO-A1-2006/089400
- WO-A1-2009/103149
- DE-U1-202012 005 822
- JP-A- 2011 007 447
- US-A- 2 213 486
- US-A1- 2004 194 914
- US-A1- 2011 061 454
- VOELKER H ET AL: "Hinterfüllung von Erdwärmesonden - Untersuchung mittels Gamma-Gamma-Dichte-Messung sowie ergänzende Messmethoden", 20120101, [Online] 18. September 2012 (2012-09-18), Seiten 1-4, XP007921946, inet Gefunden im Internet: URL:http://www.avoutta.de/index.php?option =com_content&view=article&id=130:qualitaet -erdwaeremsonde-hinterfuellung-vertikalita et-sp-10684&catid=62&Itemid=182> [gefunden am 2013-05-30]

## Beschreibung

Die vorliegende Erfindung bezieht sich in einem ersten Aspekt auf eine Messvorrichtung zum Überwachen einer Verfüllung eines Bohrlochs mit einer Baustoffsuspension nach dem Oberbegriff des Anspruchs 1.

In einem weiteren Gesichtspunkt betrifft die Erfindung ein Verfahren zum Herstellen eines verfüllten Bohrlochs nach dem Oberbegriff des Anspruchs 9.

Bohrlöcher werden zu verschiedenen Zwecken angelegt. So können Erdwärmesonden in Bohrlöcher abgeteuft werden, um Wärmeenergie des Bodens aufzunehmen. Weiterhin werden Bohrlöcher im Brunnenbau, für Erkundungsbohrungen, zur Nutzung von Grundwasser und für andere Gebiete des Spezialtiefbaus errichtet.

Das Bohrloch kann in prinzipiell beliebiger Weise hergestellt werden. Beispielsweise kann abhängig von der vorliegenden Geologie des Bodens und abhängig von der Bohrtiefe eine Trockenbohrung oder ein Spülbohrverfahren als verrohrte oder unverrohrte Bohrung durchgeführt werden.

Unabhängig vom gewählten Bohrverfahren soll vorliegend ein Bohrloch mit einer Baustoffsuspension verschlossen werden. Hierdurch kann insbesondere eine Abdichtung zwischen Grundwasser stauenden Schichten erreicht werden. So kann ein hydraulischer Kurzschluss vermieden werden, bei dem durch das Bohrloch eine Flüssigkeitsleitung zwischen unterschiedlichen Grundwasserschichten gebildet wird.

Insbesondere beim Einbau von Erdwärmesonden ist es zur Qualitätssicherung gewünscht oder erforderlich, einen momentanen Füllstand der Baustoffsuspension während der Verfüllung des Bohrlochs zu ermitteln. So soll eine durchgängige, das heißt lückenlose, Verfüllung nachgewiesen werden können.

Eine gattungsgemäße Messvorrichtung zum Überwachen einer Verfüllung eines Bohrlochs mit einer Baustoffsuspension weist eine Messsonde zum Ermitteln der Verfüllung im Bohrloch und ein Kabel zum Anheben und Senken der Messsonde auf.

Bei einem gattungsgemäßen Herstellungsverfahren eines verfüllten Bohrlochs wird zum Überwachen einer Verfüllung eines Bohrlochs mit einer Baustoffsuspension eine Messsonde, die zum Ermitteln der Verfüllung eingerichtet ist, an einem Kabel in das Bohrloch eingeführt.

Während des Verfüllens kann die Messsonde nach oben gezogen werden, um einen ansteigenden Füllstand der Baustoffsuspension mitzuverfolgen. Bei klüftiger Geologie kann es auch vorkommen, dass Baustoffsuspension aus dem Bohrloch in eine Umgebung des Bohrlochs versickert. Dadurch kann der Füllstand oder Verfüllhorizont fallen, wodurch ein erneutes Senken der Messsonde erforderlich sein kann.

Bei bekannten Messvorrichtungen und Verfahren ist es nicht in leichter Weise möglich, die Messsonde sicher anzuheben oder abzusenken. So kann es vorkommen, dass bei einem Herunterlassen des Kabels die Messsonde nicht oder nur kaum sinkt. Auch kann durch Verklemmungen oder Spannungen eintreten, dass ein Anheben der Messsonde nur mit stark erhöhtem Kraftaufwand möglich ist.

Dieses Problem tritt verstärkt ein, wenn eine Erdwärmesonde eingebaut wird. Hier kann eine Bewegung des Kabels durch die Erdwärmesonde eingeschränkt sein.

In der Präsentation "Hinterfüllung von Erdwärmesonden - Untersuchung mittels Gamma-Gamma-Dichte-Messung sowie ergänzende Messmethoden" von Voelker, H., et al. wird das Verfüllen eines Bohrlochs beschrieben, in welches eine Erdwärmesonde abgeteuft wird. Zur Überwachung der Verfüllung wird ein Temperatursensor genutzt, der in einem U-Rohr in das Bohrloch eingebracht wird.

In US 2011/0061454 A1 wird ein Sensor zum Erfassen von Eigenschaften eines un-terirdischen Bereichs beschrieben. Es sind zwei Rohre vorgesehen, die in ein Bodenloch eingebracht werden. Eines der Rohre weist einen Auslass zum Ausgeben eines flüssigen Mediums auf. Das andere Rohr umfasst einen Sensor, der das ausgegebene Medium erfassen kann. Der Sensor soll an dem umgebenden Rohr befestigt sein und kann als Sensorkette durch das gesamte Rohr verlaufen.

WO 01/07754 A1 betrifft eine Sensorkette, die in ein Bohrloch herabzulassen ist. Die Sensorkette ist mit einem Verfüllwerkzeug verbunden und wird gemeinsam mit diesem abgeteuft. Beim Hochziehen des Verfüllwerkzeugs kann die Sensorkette mit hochgezogen werden oder im Bohrloch verbleiben.

US 2,213,486 betrifft eine Sonde zum Feststellen der Füllhöhe einer Zementmischung in einem Bohrloch. Die Sonde wird mit einem Kabel innerhalb eines Rohrs in das Bohrloch abgesenkt.

Als eine **Aufgabe** der Erfindung kann daher erachtet werden, eine Messvorrichtung und ein Verfahren zum Herstellen eines verfüllten Bohrlochs bereitzustellen, wobei eine sichere Höheneinstellung der Messsonde in kostengünstiger Weise ermöglicht wird.

Diese Aufgabe wird durch die Messvorrichtung mit den Merkmalen des Anspruchs 1 und durch das Verfahren mit den Merkmalen des Anspruchs 9 gelöst.

Vorteilhafte Varianten der erfindungsgemäßen Messvorrichtung und des erfindungsgemäßen Verfahrens sind Gegenstand der abhängigen Ansprüche und werden in der folgenden Beschreibung erläutert.

Erfindungsgemäß ist bei einer Messvorrichtung der oben genannten Art ein Führungsrohr vorgesehen, in dem die Messsonde und das Kabel führbar sind.

Bei einem Verfahren der vorgenannten Art ist erfindungsgemäß vorgesehen, dass ein Führungsrohr in das Bohrloch abgeteuft wird und dass die Messsonde und das Kabel innerhalb des Führungsrohrs in das Bohrloch eingeführt werden.

Eine erste Erkenntnis, die der Erfindung zugrunde liegt, kann darin gesehen werden, dass ein Verklemmen oder Spannungen des Kabels und/oder der Messsonde vermieden werden können, wenn das Kabel mit der Messsonde nicht frei in das Bohrloch abgeteuft wird. So kann durch das Führungsrohr ein unerwünschter Kontakt des Kabels oder der Messsonde mit einer Bohrlochwand vermieden werden, welche rau oder kluftig sein kann und so das Kabel oder die Messsonde behindern kann. Wird eine Erdwärmesonde vor dem Verfüllen in das Bohrloch eingebracht, so kann durch das Führungsrohr ein Verdrillen des Kabels mit den Rohren der Erdwärmesonde vermieden werden. Insbesondere bei langen Erdwärmesonden von beispielsweise 100m kann es ohne Führungsrohr zu zahlreichen Verdrillungen kommen. Dadurch ist ein Anheben der Messsonde oft nur mit sehr hohen Zugkräften möglich. Ein erneutes Absenken der Messsonde ist bei verdrilltem Kabel kaum möglich.

Diese Nachteile können durch den Einsatz des Führungsrohrs gemäß der Erfindung weitestgehend vermieden werden. Gerät das Führungsrohr in Kontakt mit einer Bohrlochwand, so beeinträchtigt dies nicht die Beweglichkeit des Kabels und der Messsonde innerhalb des Führungsrohrs. Je nach Gestaltung des Führungsrohrs kann ein Verdrillen mit den Rohren einer Erdwärmesonde ausgeschlossen werden, oder es kann zumindest die Wahrscheinlichkeit hierfür reduziert werden. Auch wenn das Führungsrohr verdrillt sein sollte, kann dennoch innerhalb des Führungsrohrs das Kabel mit der Messsonde verhältnismäßig leicht angehoben und gesenkt werden.

Zweckmäßigerweise kann das Führungsrohr biegsam ausgeführt sein und daher auch als Schlauch oder Führungsschlauch bezeichnet werden. Es kann prinzipiell beliebiger Art sein, solange es einen Hohlraum definiert, durch den die Messsonde und das Kabel geführt werden können.

Unter einer Messsonde kann eine beliebige Messeinrichtung aufgefasst werden, die einen Rückschluss darauf erlaubt, ob sie von Baustoffsuspension umgeben ist. Insbesondere können die Messsonde und die Messvorrichtung die Merkmale umfassen, die in der deutschen Gebrauchsmusteranmeldung DE 20 2012 005 822 beschrieben sind.

Das Kabel kann zweckmäßigerweise nicht nur zur Höhenverstellung der Messsonde, sondern auch zur Datenübertragung von und/oder zu der Messsonde eingerichtet sein. Das Kabel kann auch durch einen Kabelstrang aus mehreren Einzelkabeln gebildet sein.

Im Sinne der vorliegenden Anmeldung kann unter der Baustoffsuspension ein beliebiges Material verstanden werden, solange die Dichte der Baustoffsuspension größer als die von Wasser oder von im jeweiligen Bohrloch befindlichem Grundwasser ist.

Bevorzugt ist die Messvorrichtung der Erfindung dazu eingerichtet, das Führungsrohr und das Kabel mit der Messsonde getrennt voneinander zu lagern. Dadurch kann zunächst das Führungsrohr abgeteuft werden. Ist das Führungsrohr bis zu einer gewünschten Tiefe abgeteuft, so kann das Führungsrohr im Bereich der Bodenoberfläche, in welcher das Bohrloch erzeugt ist, abgetrennt werden. Beispielsweise kann das Führungsrohr abgeschnitten oder abgesägt werden. Sodann können die Messsonde und das Kabel in das Führungsrohr und somit in das Bohrloch eingebracht werden.

Dies kann effizient erreicht werden, wenn die Messvorrichtung eine Lagerungstrommel zum Auf- und/oder Abrollen des Führungsrohrs sowie eine Kabeltrommel zum Auf- und Abrollen des Kabels aufweist. Dabei sind die Lagerungstrommel und die Kabeltrommel unabhängig voneinander drehbare Trommeln.

Bevorzugt sind Antriebsmittel zum Bewegen des Kabels relativ zum Führungsrohr vorgesehen. Beispielsweise kann mit den Antriebsmitteln entweder die Lagerungstrommel oder die Kabeltrommel gedreht werden. Hierbei ist prinzipiell ein einziger Antrieb ausreichend, der zunächst mit der Lagerungstrommel verbunden wird, um das Führungsrohr abzuteufen, und anschließend mit der Kabeltrommel verbunden wird, um das Kabel mit der Messsonde im Führungsrohr abzusenken und wieder anzuheben.

Ein Vermeiden von Verdrillungen, die ein Anheben oder Senken der Messsonde erschweren, ist besonders wichtig, wenn eine Erdwärmesonde vorhanden ist. Eine solche umfasst mindestens ein Rohrpaar, wobei durch das Rohrpaar ein Wärmeträgerfluid zum Wärmeaustausch mit einer Umgebung leitbar ist. Die Erdwärmesonde kann als Bestandteil der Messvorrichtung angesehen werden. In diesem Fall kann die Messvorrichtung auch als Vorrichtung zum Verbauen einer Erdwärmesonde erachtet werden und kann auch eine Lanze zum Einführen der Baustoffsuspension in das Bohrloch umfassen.

Das Rohrpaar ist an dem Ende, mit dem die Erdwärmesonde in das Bohrloch eingeführt wird, mit einem Sondenfuß verbunden. Dieser stellt eine Fluidverbindung zwischen den beiden Röhren oder Schläuchen des Rohrpaares her. Zudem bietet der Sondenfuß einen mechanischen Schutz. Grundsätzlich können auch mehrere Rohrpaare oder mehrere Erdwärmesonden in dasselbe Bohrloch eingebracht werden. Das Wärmeträgerfluid in einem Rohrpaar kann eine Wärmeträgerflüssigkeit, wie zum Beispiel Sole, sein. Ein Rohrpaar oder mehrere Rohrpaare können auch alsRohrbündel bezeichnet werden.

Bevorzugt ist die Erdwärmesonde auf der Lagerungstrommel aufgerollt. Hierdurch können die Erdwärmesonde und das Führungsrohr gemeinsam abgeteuft werden. Vorteilhafterweise erfordert dadurch das Abteufen des Führungsrohrs keine zusätzlichen, apparativ aufwändigen Maßnahmen. Zudem kann sichergestellt werden, dass das Führungsrohr in einem definierten Tiefenverhältnis zur Erdwärmesonde abgeteuft wird. Beispielsweise können beide auf die gleiche Tiefe gesenkt werden. Es ist aber auch möglich, dass bei einem gemeinsamen Abrollen des Führungsrohrs und der Erdwärmesonde von der Lagerungstrommel das Führungsrohr weiter hervorsteht. Hierdurch wird das Führungsrohr tiefer ins Bohrloch ragen als die Erdwärmesonde. Dies kann für eine sichere Verfüllung des Bohrlochs vorteilhaft sein, wenn die Erdwärmesonde nicht bis zu einem Bodenbereich des Bohrlochs abgeteuft wird.

Alternativ kann aber auch die Erdwärmesonde gegenüber dem Führungsrohr weiter ins Bohrloch hineinragen. Dies kann gewünscht sein, um einen Kontakt des Führungsrohrs mit dem Bodenbereich des Bohrlochs zu vermeiden. Bei einem solchen Kontakt könnte es zu einer Beeinträchtigung der Führung der Messsonde und des Kabels kommen.

Durch das Führungsrohr kommt es bereits deshalb seltener zu Verdrillungen, weil dessen Querschnitt größer ist als der des Kabels und der Messsonde. Die Wahrscheinlichkeit für Verdrillungen kann noch weiter reduziert werden, wenn das Führungsrohr mit der Erdwärmesonde verbunden ist. So kann das Führungsrohr an zumindest einer oder mehrerer Stellen an einem Rohrpaar, einem Rohr und/oder einem Sondenfuß der Erdwärmesonde befestigt sein. Wegen der erhöhten Steifigkeit des Rohrpaares kann ein weitestgehend geradliniger Verlauf des Führungsrohrs im Bohrloch erreicht werden.

Das Führungsrohr und das Rohrpaar der Erdwärmesonde können so miteinander verbunden sein, dass bei einem teilweise von der Lagerungstrommel abgerollten Zustand das Führungsrohr und das mindestens eine Rohrpaar gleich weit oder unterschiedlich weit abgerollt sind.

Wird die Messsonde im Bohrloch hochgezogen und wird dabei das Kabel auf der Kabeltrommel aufgerollt, soll vermieden werden, dass das Führungsrohr mitaufgerollt wird. Hierzu kann eine Halterungseinrichtung vorgesehen sein, mit der bei einem Hochziehen des Kabels das Führungsrohr in Ruhe gehalten wird.

Prinzipiell ist es auch möglich, dass das Kabel innerhalb des Führungsrohrs auf einer gemeinsamen Trommel aufgerollt ist. Hierdurch können das Führungsrohr und die Messsonde mit dem Kabel gemeinsam abgeteuft werden. Damit das Kabel relativ zum Führungsrohr höhenverstellt werden kann, kann das Führungsrohr nach dem Abteufen an der Bohrlochoberfläche abgetrennt werden.

Damit die Messsonde einen Füllstand der Baustoffsuspension im Bohrloch möglichst genau ermitteln kann, sollte der Füllstand im Bohrloch weitestgehend dem Füllstand der Baustoffsuspension im Führungsrohr entsprechen. In gewissem Umfang kann dies durch ein Einströmen der Baustoffsuspension an der unteren Öffnung des Führungsrohres erfolgen. Füllstandsunterschiede können aber besonders effektiv verringert werden, wenn das Führungsrohr entlang seiner Länge Fluidöffnungen zum Bereitstellen einer Fluidverbindung zwischen einem Inneren des Führungsrohrs und einer Umgebung des Führungsrohrs aufweist. Die Fluidöffnungen erlauben ein Ein- und Austreten der Baustoffsuspension oder eines anderen Fluids aus dem Bohrloch in das Führungsrohr hinein. Die Fluidöffnungen können prinzipiell beliebig geformt sein oder auch durch eine einzige Öffnung gebildet sein, die sich entlang der Längsrichtung des Führungsrohrs erstreckt. Auch die Anzahl und Anordnung der Fluidöffnungen kann prinzipiell beliebig gewählt sein.

Eine Ausdehnung der Fluidöffnungen ist bevorzugt kleiner als 5cm, besonders bevorzugt kleiner als 2cm, und größer als 0,5cm. Dadurch kann ein Eintreten von Festkörpern wie beispielsweise Steinen weitgehend vermieden werden.

Bevorzugt sind die Fluidöffnungen durch Bohrungen im Führungsrohr gebildet. Unter einer Bohrung kann auch ein Bereich des Führungsrohrs verstanden werden, der durch Stanzen, Schneiden oder in anderer Weise aus dem Führungsrohr herausgetrennt ist. Bevorzugt sind die Bohrungen runde, insbesondere kreisförmige, Öffnungen.

Alternativ können die Fluidöffnungen auch durch einen oder mehrere Schlitze gebildet sein. Eine Erstreckungsrichtung der Schlitze liegt im Wesentlichen parallel zur Längsrichtung des Führungsrohrs. Auch eine spiralförmige Anordnung der Schlitze am Führungsrohr ist möglich.

Um das gleichzeitige Blockieren mehrerer Fluidöffnungen zu vermeiden, können die Fluidöffnungen in Umfangsrichtung des Führungsrohrs zueinander versetzt angeordnet sein. Es liegen also nicht sämtliche Fluidöffnungen auf einer Geraden. Liegt das Führungsrohr beispielsweise mit einer Seite an einer Bohrlochwand an, wodurch die Fluidöffnungen zur Bohrlochwand hin blockiert sein können, kann weiterhin durch gegenüberliegende Fluidöffnungen ein Fluidaustausch zwischen dem Führungsrohr und seiner Umgebung erfolgen. Zudem bietet eine versetzte Anordnung der Fluidöffnungen eine höhere Stabilität des Führungsrohrs.

Der Abstand zwischen zwei benachbarten Fluidöffnungen in Längsrichtung des Frührungsrohrs trägt maßgeblich zur Genauigkeit bei, mit der auf einen Füllstand außerhalb des Führungsrohrs geschlossen werden kann. Dieser Abstand ist bevorzugt zwischen 5 cm und 30 cm gewählt und beträgt besonders bevorzugt 10 cm.

Die Innenabmessungen des Querschnitts des Führungsrohrs sind zweckmäßigerweise größer als Querschnittsabmessungen der Messsonde. Hierdurch kann auch innerhalb des Führungsrohrs eine Fluidverbindung zwischen Bereichen oberhalb und unterhalb der Messsonde erzeugt werden. Zudem kann ein Unterdruck vermieden werden, der ohne eine solche Fluidverbindung bei einem Hochziehen der Sonde entstehen könnte. Zudem kann die Wahrscheinlichkeit für ein Verkanten der Messsonde bei gekrümmten Abschnitten des Führungsrohrs reduziert werden. Die innere Oberfläche des Führungsrohrs ist vorzugsweise glatt, das heißt eben, ausgeführt. Dadurch wird Reibung der Messsonde am Führungsrohr reduziert und die Wahrscheinlichkeit für ein Blockieren der Messsonde im Führungsrohr kann verringert werden. Damit Steine oder andere Festkörper innerhalb des Führungsrohrs ein Hochziehen der Messsonde möglichst wenig behindern, kann eine Spaltgröße zwischen der Messsonde und einer Innenwand des Führungsrohrs mindestens so groß gewählt sein wie eine Abmessung der Fluidöffnungen. Durch die Fluidöffnungen eintretende Steine können in diesem Fall innerhalb des Führungsrohrs die Messsonde passieren. Unter der Abmessung der Fluidöffnung kann der Durchmesser einer runden Öffnung oder die Breite eines länglichen Schlitzes verstanden werden. Somit kann die Spaltgröße zu größer als 1cm oder 2cm gewählt sein. Durch eine höhere Spaltgröße kann die Messsonde auch problemlos durch gekrümmte Abschnitte des Führungsrohrs bewegt werden. Es kann aber auch vorteilhaft sein, eine Spaltgröße zwischen 1 mm und 5mm, bevorzugt höchstens 3mm vorzusehen. Dadurch kann eine gut definierte Führung der Messsonde gewährleistet werden.

Die Führung der Messsonde innerhalb des Führungsrohrs wird erleichtert, wenn die Messsonde eine zum Kabel hin verjüngende Form hat. Auch die dem Kabel abgewandte Seite der Messsonde kann verjüngt ausgeführt sein. Dadurch können beispielsweise Steine und andere Hindernisse im Führungsrohr besser an der Messsonde vorbei geleitet werden.

Um ein sicheres Abteufen des Führungsrohrs zu erreichen, kann dieses an einem Ende mit einem Zusatzgewicht versehen sein. Zusätzlich oder alternativ kann das Führungsrohr zu diesem Zweck auch mit der Erdwärmesonde verbunden sein. Beispielsweise kann der Sondenfuß, der ein Rohrpaar der Erdwärmesonde verbindet, auch das Führungsrohr halten. Ein leichtes Kombinieren des Führungsrohrs mit Erdwärmesonden verschiedener Bauarten kann erreicht werden, wenn das Führungsrohr mit einer zusätzlichen mechanischen Verbindung, insbesondere in dessen Endbereich, mit der Erdwärmesonde verbunden ist. Diese mechanische Verbindung kann beispielsweise mit Klemmen erfolgen, welche das Führungsrohr und ein Rohr der Erdwärmesonde umgreifen.

Prinzipiell ist auch möglich, dass das Führungsrohr durch voneinander getrennte Führungsrohrabschnitte gebildet ist. Diese können beispielsweise mit dem Rohrpaar verbunden und zueinander beabstandet sein. Hierdurch können material- und raumsparende Ausführungen ermöglicht werden.

Vorzugsweise sind das Führungsrohr und das mindestens eine Rohrpaar der Erdwärmesonde aus gleichem Material hergestellt. Zusätzlich oder alternativ können eine Querschnittsgröße und eine Querschnittsform des Führungsrohrs und eines der Rohre der Erdwärmesonde gleich sein. Beispielsweise können sie einen Durchmesser von 32mm bei einer Wandstärke von 2,9mm aufweisen. Somit können das Führungsrohr und die Rohre der Erdwärmesonde in prinzipiell gleicher Weise hergestellt werden, womit eine kostengünstigere Fertigung realisierbar ist. Zudem wird ein gemeinsames Aufrollen auf einer Lagerungstrommel erleichtert. Besonders bevorzugt stimmt das Führungsrohr mit einem Rohr der Erdwärmesonde bis auf den Unterschied überein, dass das Führungsrohr mit Fluidöffnungen an seiner Mantelfläche versehen wird.

Für eine noch bessere Handhabung der Messvorrichtung kann das Führungsrohr mit der Erdwärmesonde einteilig ausgeführt sein. Hierbei teilen sich das Führungsrohr und ein Rohr der Erdwärmesonde eine gemeinsame Wand, welche das Innere des Führungsrohrs vom Inneren des Rohrs der Erdwärmesonde teilt. Ein solcher Aufbau kann als Doppelrohr bezeichnet werden. Weiterhin können sich auch die Messsonde und zwei Rohre der Erdwärmesonde zwei oder drei Wände teilen, was als Dreifachrohr bezeichnet werden kann.

Bei diesen Ausführungen hängt also das Führungsrohr an einem Rohr oder an zwei Rohren der Erdwärmesonde.

Das Führungsrohr kann auch mit verhältnismäßig langen Messsonden verwendet werden, die beispielsweise länger als 1 m sind. Damit eine Bewegung der Messsonde relativ zu einem gekrümmten Führungsrohr in leichter Weise möglich ist, weist die Messsonde bevorzugt zumindest einen biegsamen Abschnitt auf. Dieser kann sich in einem mittleren Bereich der Messsonde befinden, so dass sich die Messsonde an eine gekrümmte Form des Führungsrohrs anpassen kann.

Bei einer bevorzugten Variante des erfindungsgemäßen Verfahrens wird das Einführen der Messsonde und des Kabels in das Führungsrohr erst nach einem Abteufen des Führungsrohrs in das Bohrloch durchgeführt. So kann nach dem Abteufen des Führungsrohrs dessen oberes Ende zunächst zugänglich gemacht werden. Beispielsweise kann das Führungsrohr im Bereich der Bohrlochoberfläche abgetrennt werden. So ist in leichter Weise ein Höhenverstellen der Messsonde relativ zum Führungsrohr möglich.

Die Erfindung umfasst auch ein Verfahren zum Herstellen eines verfüllten Bohrlochs, bei dem eine Baustoffsuspension in ein Bohrloch geleitet wird, wobei eine momentane Verfüllung durch das erfindungsgemäße Verfahren zum Überwachen einer Verfüllung eines Bohrlochs überwacht wird.

Während dem Verfüllen des Bohrlochs wird zweckmäßigerweise eine Höhenverstellung der Messsonde im Bohrloch durchgeführt. Bei der Erfindung kann die Höhenverstellung der Messsonde relativ zum Führungsrohr erfolgen.

Bei einer bevorzugten Verfahrensvariante wird während dem Verfüllen des Bohrlochs das Führungsrohr im Bohrloch belassen. Es kann vorgesehen sein, dass nach dem Verfüllen das Führungsrohr wieder entfernt wird, so dass das Führungsrohr wiederverwendbar ist. Ein besonders einfacher und schneller Verfahrensablauf wird jedoch erreicht, wenn auch nach dem Verfüllen das Führungsrohr im Bohrloch belassen wird.

Bei dem Verfahren zum Herstellen eines verfüllten Bohrlochs gemäß der Erfindung kann vorgesehen sein, dass vor einem Einleiten der Baustoffsuspension eine Erdwärmesonde in das Bohrloch abgeteuft wird. Dabei umfasst die Erdwärmesonde mindestens ein Rohrpaar, durch welches ein Wärmeträgerfluid zum Wärmeaustausch mit einer Umgebung leitbar ist. Wird das Führungsrohr gemeinsam mit der Erdwärmesonde abgeteuft, kann ein besonders schneller Verfahrensablauf mit wenigen Schritten erreicht werden.

Bevorzugt wird die Messsonde automatisch in der Höhe verfahren. Hierzu kann vorgesehen sein, die Messsonde anzuheben, wenn mit dieser gemessen wird, dass ein momentaner Verfüllhorizont oberhalb der Messsonde liegt. Ein Absenken kann bei einer Feststellung erfolgen, dass der Verfüllhorizont unterhalb der Messsonde liegt.

Weitere Merkmale und Vorteile der Erfindung werden nachstehend mit Bezug auf die beigefügten schematischen Figuren beschrieben. Hierin zeigen:
- Fig. 1: ein Ausführungsbeispiel einer erfindungsgemäßen Messvorrichtung zum Überwachen einer Verfüllung eines Bohrlochs;
- Fig. 2: eine Detailansicht der Messvorrichtung aus Fig. 1 und
- Fig. 3: ein Ausführungsbeispiel von Komponenten einererfindungsgemäßen Messvorrichtung vor Einführen in ein Bohrloch.

Gleiche und gleich wirkende Komponenten sind in den Figuren in der Regel mit übereinstimmenden Bezugszeichen versehen.

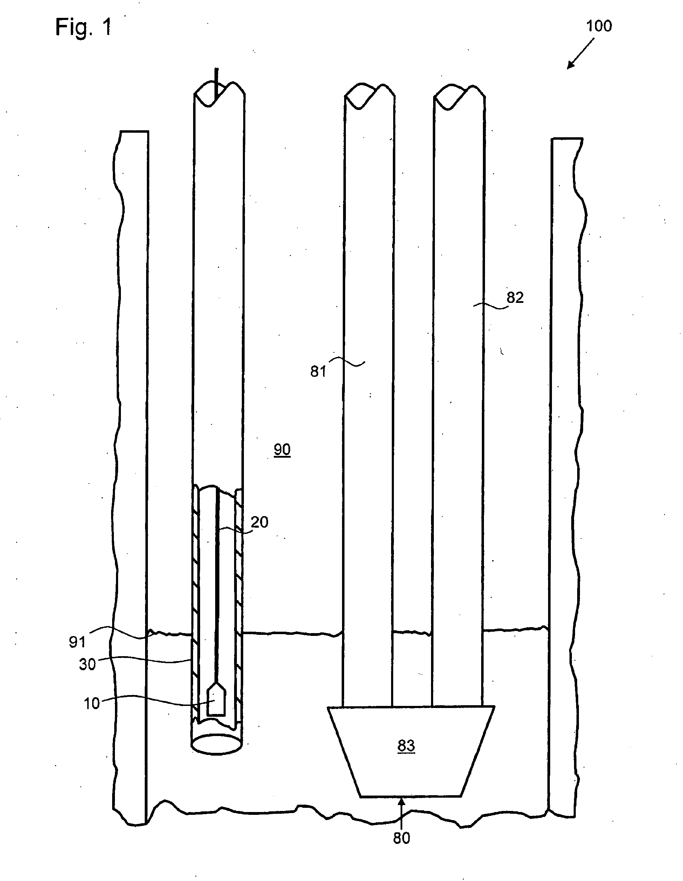

Fig. 1 zeigt schematisch einen Querschnitt eines Bohrlochs 90 und einer erfindungsgemäßen Messvorrichtung 100 zum Überwachen einer Verfüllung des Bohrlochs 90 mit einer Baustoffsuspension.

Die Messvorrichtung 100 umfasst unter anderem eine Messsonde 10 zum Ermitteln der Verfüllung oder des Füllstands 91 und ein Kabel 20 zum Anheben und Senken der Messsonde 10.

Die Messvorrichtung 100 weist weiterhin eine Erdwärmesonde 80 auf und kann daher auch als Vorrichtung 100 zum Verbauen einer Erdwärmesonde 80 bezeichnet werden.

Die Erdwärmesonde 80 umfasst mindestens ein Rohrpaar 81, 82, dessen Rohre 81 und 82 an einem unteren Ende durch einen Sondenfuß 83 miteinander fluidmäßig verbunden sind. Im verbauten Zustand kann somit ein Wärmeträgerfluid mit beispielsweise einer Umwälzpumpe durch die Erdwärmesonde 80 gepumpt werden und so Wärmeenergie von einer Umgebung der Erdwärmesonde 80 aufnehmen oder auch an diese abgeben.

Nach Abteufen der Erdwärmesonde 80 soll das Bohrloch 90 mit einer Baustoffsuspension verfüllt werden. Zur Überwachung eines momentanen Verfüllhorizonts 91 dient die Messsonde 10. Diese soll angehoben werden, wenn der Verfüllhorizont 91 durch Einleiten von Baustoffsuspension in das Bohrloch 90 steigt. Bei einem Fallen des Verfüllhorizonts 91 soll zudem die Messsonde 10 wieder gesenkt werden. Dieser Fall kann beispielsweise eintreten, wenn Baustoffsuspension aus dem Bohrloch 90 in eine Umgebung des Bohrlochs 90 entweicht.

Bei herkömmlichen Messsonden 10 droht ein Verdrillen des Kabels 20 mit der Erdwärmesonde 80. Dadurch kann die Messsonde 10 nur mit erhöhtem Kraftaufwand angehoben werden. Ein erneutes Senken der Messsonde 10 ist bei Verdrillungen unter Umständen sogar gänzlich ausgeschlossen.

Dieses Problem wird weitgehend reduziert, indem die Messvorrichtung 100 ein Führungsrohr 30 aufweist. Das Führungsrohr 30 kann durch einen biegsamen Führungsschlauch 30 gebildet sein, innerhalb dem die Messsonde 10 und das Kabel 20 beweglich aufgenommen sind. Verdrillungen des Kabels 20 oder sonstige Verklemmungen der Messsonde 10, beispielsweise an einer Wand des Bohrlochs 90, können so weitestgehend vermieden werden.

Durch die höhere Biegesteifigkeit des Führungsrohrs 30 im Vergleich zum Kabel 20 wird die Wahrscheinlichkeit von Verdrillungen stark reduziert. Aber auch bei einer Verdrillung des Führungsrohrs 30 mit einem Rohr 81, 82 der Erdwärmesonde 80 ist noch ein verhältnismäßig einfaches Anheben und Senken der Messsonde 10 innerhalb des Führungsrohrs 30 möglich.

In dem Ausführungsbeispiel von Fig. 1 sind das Führungsrohr 30 und die Erdwärmesonde 80 voneinander getrennt. Die Wahrscheinlichkeit für Verdrillungen kann aber noch weiter reduziert werden, wenn das Führungsrohr 30, bevorzugt an dessen unterem Bereich, mit der Erdwärmesonde 80 verbunden ist

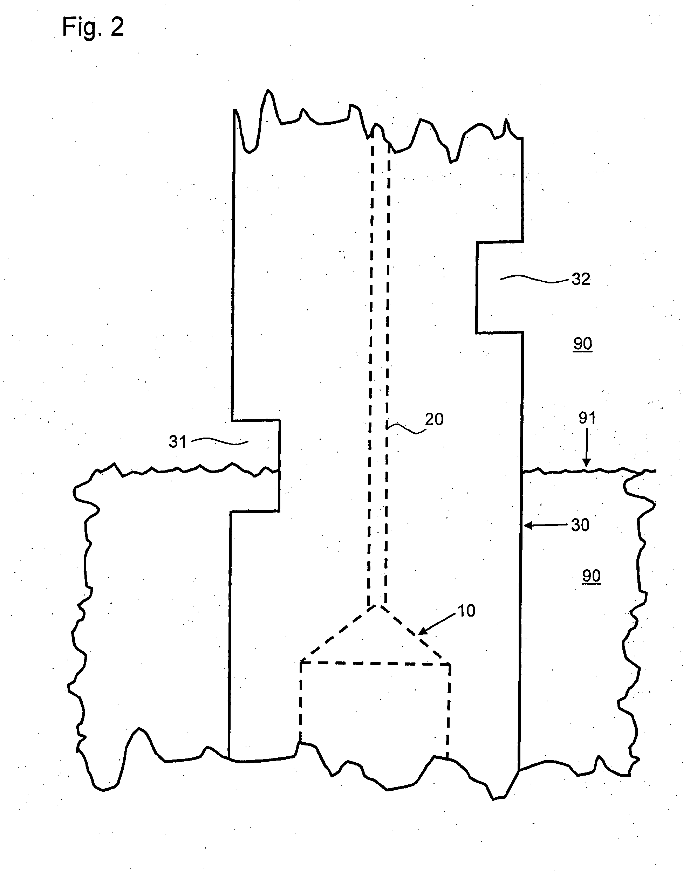

Damit die Messsonde 10 den momentanen Füllstand 91 der Baustoffsuspension möglichst genau bestimmen kann, sollte der Füllstand innerhalb des Führungsrohrs 30 nur gering von dem Füllstand 91 außerhalb des Führungsrohrs 30 abweichen. Die hierfür vorgesehenen Merkmale werden mit Bezug auf Fig. 2 beschrieben. Diese zeigt vergrößert einen Ausschnitt der Messvorrichtung 100 aus Fig. 1. Es ist dargestellt, dass das Führungsrohr 30 an seiner Mantelfläche mehrere Fluidöffnungen 31, 32 aufweist. Diese ermöglichen einen Fluidaustausch zwischen dem Innenraum im Führungsrohr 30 und der Umgebung des Führungsrohrs 30. Zweckmäßigerweise umfasst das Führungsrohr 30 Fluidöffnungen 31, 32 an verschiedenen Höhen. Im dargestellten Beispiel befindet sich ein momentaner Füllstand 91 der Baustoffsuspension im Bereich der Fluidöffnung 31. Daher kann durch diese Fluidöffnung 31 Baustoffsuspension in das Führungsrohr 30 eintreten. Bei einem Einleiten von Baustoffsuspension in das Bohrloch 90 kann der Füllstand 91 ansteigen und darauf durch die Fluidöffnung 32 in das Führungsrohr 30 eintreten.

In einer Umfangsrichtung des Führungsrohrs 30 befinden sich die Fluidöffnungen 31 und 32 beabstandet zueinander. Wird das Führungsrohr 30 von einer Seite unerwünschterweise abgedeckt, kann in dieser Weise durch eine Fluidöffnung, die sich auf einer anderen Seite befindet, weiterhin ein Fluidaustausch erfolgen. Bevorzugt sind jeweils zwei aufeinander folgende Fluidöffnungen 31, 32 in Umfangsrichtung beabstandet zueinander. Die besten Ergebnisse werden erzielt, wenn zwei aufeinander folgende Fluidöffnungen 31, 32 in Umfangsrichtung gerade einander gegenüberliegen, insbesondere in Umfangsrichtung um 180° versetzt sind. Für eine einfache Herstellung können die jeweils übernächsten Fluidöffnungen in Umfangsrichtung an derselben Stelle angeordnet sein.

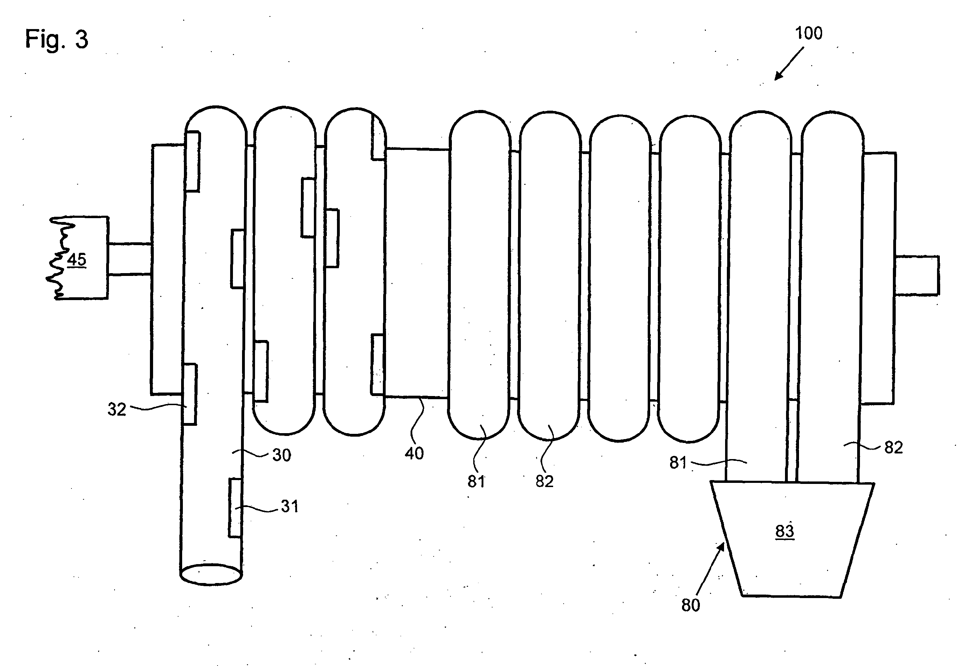

Ein weiteres Ausführungsbeispiel einer erfindungsgemäßen Messvorrichtung 100 ist schematisch in Fig. 3 dargestellt. Hier ist zusätzlich eine Lagerungstrommel 40 abgebildet, auf welcher das Führungsrohr 30 und die Erdwärmesonde 80 aufgerollt sind. In diesem Zustand kann sich die Messvorrichtung 100 befinden, bevor die Erdwärmesonde 80 und das Führungsrohr 30 in ein Bohrloch abgeteuft werden.

Indem die Erdwärmesonde 80 und das Führungsrohr 30 auf einer gemeinsamen Lagerungstrommel 40 aufgerollt sind, können diese in leichter Weise gemeinsam abgeteuft werden. Gegenüber herkömmlichen Einbauverfahren einer Erdwärmesonde wird daher durch das Führungsrohr 30 kein zusätzlicher Verfahrensschritt notwendig.

Im dargestellten Beispiel sind das Führungsrohr 30 und die Erdwärmesonde 80 getrennt voneinander auf derselben Lagerungstrommel 40 aufgerollt. Alternativ können sie aber auch als ein Bündel aufgerollt sein. In diesem Fall befindet sich das freie Ende des Führungsrohrs 30 direkt benachbart zum Sondenfuß 83. Abschnitte der Röhren 81, 82 der Erdwärmesonde 80 und des Führungsrohrs 30, welche einer gleichen Höhe oder Längsposition entsprechen, befinden sich dann auf der Lagerungstrommel 40 direkt nebeneinander, das heißt ohne dass andere Windungen des Führungsrohrs 30 oder der Röhren 81, 82 dazwischen liegen. Hierdurch kann ein einfaches Abrollen des Führungsrohres 30 und der Erdwärmesonde 80 erreicht werden.

Das Führungsrohr 30 kann auch mit dem Sondenfuß 83 oder mit den Röhren 81, 82 im Bereich des Sondenfußes 83 mechanisch verbunden werden, bevor diese auf die Lagerungstrommel 40 aufgerollt werden. Dadurch kann vermieden werden, dass bei Überkreuzungen der Röhren 81, 82 und des Führungsrohrs 30 auf der Lagerungstrommel 40 ein Abrollen behindert wird.

Die Lagerungstrommel 40 wird über Antriebsmittel 45 oder einen Antrieb 45 motorisch gedreht. Vorteilhafterweise können für ein Abrollen des Führungsrohrs 30 und der Erdwärmesonde 80 dieselben Antriebsmittel 45 genutzt werden.

Prinzipiell können die Erdwärmesonde 80 und das Führungsrohr 30 aber auch auf verschiedenen Lagerungsrollen aufgerollt sein. Hierdurch kann ein leichtes Nachrüsten erreicht werden, wenn bereits eine Lagerungstrommel mit aufgerollter Erdwärmesonde vorhanden ist.

In Fig. 3 nicht dargestellt sind die Messsonde und das zugehörige Kabel. Diese sind bevorzugt auf einer separaten Kabeltrommel aufgerollt. Hierdurch können das erfindungsgemäße Verfahren zum Überwachen einer Verfüllung eines Bohrlochs und das erfindungsgemäße Verfahren zum Herstellen eines verfüllten Bohrlochs besonders einfach durchgeführt werden. Diese werden im Folgenden näher mit Bezug auf die Figuren 1 und 3 beschrieben.

Nach dem Herstellen eines Bohrlochs werden die Erdwärmesonde 80 und das Führungsrohr 30 abgeteuft, indem die gemeinsame Lagerungstrommel 40 rotiert wird. Dabei erstreckt sich das Führungsrohr 30 im Bohrloch 90 bevorzugt bis zu einer Tiefe des Sondenfußes 83, wie in Fig. 1 dargestellt. Eine Länge des Führungsrohrs 30 ist so bemessen, dass bei einem Abrollen des Führungsrohrs 30 bis zu einer gewünschten Tiefe das obere Ende des Führungsrohrs 30 weiterhin an der Lagerungstrommel 40 gehalten wird. Sodann wird im Bereich der Bohrlochoberfläche das Führungsrohr 30 durch eine zusätzliche Halteeinrichtung gestützt. Daraufhin wird das Führungsrohr 30 zwischen der Halteeinrichtung und der Lagerungstrommel 40 durchtrennt. Dadurch wird das obere Ende des Führungsrohrs 30 frei zugänglich. Sodann werden die Messsonde 10 und das Kabel 20 durch das obere Ende des Führungsrohrs 30, welches durch das Abtrennen erzeugt wurde, eingeführt. Innerhalb des Führungsrohrs 30 wird die Messsonde 10 abgeteuft.

Sodann kann ein Verfüllen des Bohrlochs 90 mit einer Baustoffsuspension beginnen. Dabei wird die Messsonde 10 angehoben und gegebenenfalls abgesenkt, um den aktuellen Füllstand 91 zu überwachen. Mit Abschluss des Verfüllens wird die Messsonde 10 am Kabel 20 vollständig aus dem Bohrloch 90 gehoben. Das Führungsrohr 30 wird während des Verfüllens bevorzugt nicht angehoben. Nach dem Verfüllen kann das Führungsrohr 30 entfernt oder auch im verfüllten Bohrloch 90 belassen werden.

In jedem Fall wird durch die erfindungsgemäße Messvorrichtung 100 erreicht, dass ein Anheben und Absenken der Messsonde 10 erleichtert wird und eine Höheneinstellung der Messsonde 10 zuverlässiger erfolgen kann. Dies wird maßgeblich dadurch erreicht, dass das Führungsrohr 30 Verdrillungen, Verklemmungen oder sonstige Beeinträchtigungen der Messsonde 10 und des Kabels 20 innerhalb des Bohrlochs 90 reduziert oder ausschließt.

## Patentansprüche

1. Messvorrichtung zum Überwachen einer Verfüllung eines Bohrlochs (90) mit einer Baustoffsuspension
mit einer Messsonde (10) zum Ermitteln der Verfüllung im Bohrloch (90),
mit einem Kabel (20) zum Anheben und Senken der Messsonde (10),
mit einem Führungsrohr (30), in dem die Messsonde (10) und das Kabel (20) führbar sind,
mit einer Erdwärmesonde (80), welche mindestens ein Rohrpaar (81, 82) umfasst, wobei durch das Rohrpaar (81, 82) ein Wärmeträgerfluid zum Wärmeaustausch mit einer Umgebung leitbar ist,
**dadurch gekennzeichnet,**
**dass** eine Lagerungstrommel (40) zum Auf- und/oder Abrollen des Führungsrohrs (30) vorgesehen ist,
**dass** eine Kabeltrommel zum Auf- und Abrollen des Kabels (20) vorgesehen ist,
**dass** die Erdwärmesonde (80) auf der Lagerungstrommel (40) aufgerollt ist.

2. Messvorrichtung nach Anspruch 1,
**dadurch gekennzeichnet,**
**dass** das Führungsrohr (30) mit einem Rohrpaar (81, 82) der Erdwärmesonde (80) verbunden ist.

3. Messvorrichtung nach Anspruch 1 oder 2,
**dadurch gekennzeichnet,**
**dass** das Führungsrohr (30) entlang seiner Länge Fluidöffnungen (31, 32) zum Bereitstellen einer Fluidverbindung zwischen einem Inneren des Führungsrohrs (30) und einer Umgebung des Führungsrohrs (30) aufweist.

4. Messvorrichtung nach Anspruch 3,
**dadurch gekennzeichnet,**
**dass** die Fluidöffnungen (31, 32) durch Bohrungen im Führungsrohr (30) gebildet sind.

5. Messvorrichtung nach einem der Ansprüche 1 bis 4,
**dadurch gekennzeichnet,**
**dass** die Fluidöffnungen (31, 32) in Umfangsrichtung des Führungsrohrs (30) zueinander versetzt angeordnet sind.

6. Messvorrichtung nach einem der Ansprüche 2 bis 5,
**dadurch gekennzeichnet,**
**dass** eine Querschnittsgröße und eine Querschnittsform des Führungsrohrs (30) und eines der Rohre (81, 82) der Erdwärmesonde (80) gleich sind.

7. Messvorrichtung nach einem der Ansprüche 1 bis 6,
**dadurch gekennzeichnet,**
**dass** die Messsonde (10) zumindest einen biegsamen Abschnitt aufweist.

8. Messvorrichtung nach einem der Ansprüche 1 bis 7,
**dadurch gekennzeichnet,**
**dass** die Messsonde (10) sich eine Wand mit einem oder zwei der Rohre (81, 82) der Erdwärmesonde (80) teilt und so ein Doppel- oder Dreifachrohr bildet.

9. Verfahren zum Herstellen eines verfüllten Bohrlochs,
bei dem eine Baustoffsuspension in ein Bohrloch (90) geleitet wird,
bei dem zum Überwachen einer Verfüllung eines Bohrlochs (90) mit einer Baustoffsuspension eine Messsonde (10), die zum Ermitteln der Verfüllung eingerichtet ist, an einem Kabel (20) in das Bohrloch (90) eingeführt wird, bei dem ein Führungsrohr (30) in das Bohrloch (90) abgeteuft wird,
bei dem die Messsonde (10) und das Kabel (20) innerhalb des Führungsrohrs (30) in das Bohrloch (90) eingeführt werden
bei dem vor einem Einleiten der Baustoffsuspension eine Erdwärmesonde (80) in das Bohrloch (90) abgeteuft wird,
wobei die Erdwärmesonde (80) mindestens ein Rohrpaar (81, 82) umfasst, durch welches ein Wärmeträgerfluid zum Wärmeaustausch mit einer Umgebung leitbar ist,
**dadurch gekennzeichnet,**
**dass** das Führungsrohr (30) gemeinsam mit der Erdwärmesonde (80) abgeteuft wird.

10. Verfahren nach Anspruch 9,
**dadurch gekennzeichnet,**
**dass** das Einführen der Messsonde (10) und des Kabels (20) in das Führungsrohr (30) erst nach einem Abteufen des Führungsrohrs (30) in das Bohrloch (90) durchgeführt wird.

11. Verfahren nach Anspruch 10,
**dadurch gekennzeichnet,**
**dass** während dem Verfüllen des Bohrlochs (90) eine Höhenverstellung der Messsonde (10) im Bohrloch (90) durchgeführt wird und dass die Höhenverstellung der Messsonde (10) relativ zum Führungsrohr (30) durchgeführt wird.

12. Verfahren nach Anspruch 10 oder 11,
**dadurch gekennzeichnet,**
**dass** während dem Verfüllen des Bohrlochs (90) das Führungsrohr (30) im Bohrloch (90) belassen wird.

## Claims

1. Measuring device for monitoring the filling of a borehole (90) with a suspension of construction material
with a measuring probe (10) for determining the filling in the borehole (90),
with a cable (20) for lifting and lowering the measuring probe (10),
with a guide tube (30), in which the measuring probe (10) and the cable (20) can be guided,
with a geothermal probe (80) comprising at least one tube pair (81, 82), wherein a heat carrier fluid can be passed through the tube pair (81, 82) for heat exchange with an environment,
**characterized in that**
a support drum (40) is provided for winding up and/or unwinding the guide tube (30),
**in that** a cable drum is provided for winding up and unwinding the cable (20),
the geothermal probe (80) is wound onto the support drum (40).

2. Measuring device according to claim 1,
**characterized in that**
the guide tube (30) is connected to a tube pair (81, 82) of the geothermal probe (80).

3. Measuring device according to claim 1 or 2,
**characterized in that**
along its length the guide tube (30) has fluid openings (31, 32) for providing a fluid connection between an interior of the guide tube (30) and an environment of the guide tube (30).

4. Measuring device according to claim 3,
**characterized in that**
the fluid openings (31, 32) are formed by bores in the guide tube (30).

5. Measuring device according to any one of claims 1 to 4,
**characterized in that**
the fluid openings (31, 32) are arranged by being offset to each other in the circumferential direction of the guide tube (30).

6. Measuring device according to any one of claims 2 to 5, **characterized in that**
a cross-sectional size and a cross-sectional shape of the guide tube (30) and of one of the tubes (81, 82) of the geothermal probe (80) are equal.

7. Measuring device according to any one of claims 1 to 6,
**characterized in that**
the measuring probe (10) has at least one flexible section.

8. Measuring device according to any one of claims 1 to 7,
**characterized in that**
the measuring probe (10) shares a wall with one or two of the tubes (81, 82) of the geothermal probe (80) and thus forms a double or triple tube.

9. Method for producing a filled borehole,
in which a suspension of construction material is passed into a borehole (90), in which for the purpose of monitoring a filling of a borehole (90) with a suspension of construction material a measuring probe (10), adapted to determine the filling, is introduced on a cable (20) into the borehole (90),
in which a guide tube (30) is sunk into the borehole (90),
in which the measuring probe (10) and the cable (20) are introduced inside the guide tube (30) into the borehole (90),
in which prior to the introduction of the suspension of construction material a geothermal probe (80) is sunk into the borehole (90),
wherein the geothermal probe (80) comprises at least one tube pair (81, 82), through which a heat carrier fluid can be passed for heat exchange with an environment,
**characterized in that**
the guide tube (30) is sunk jointly with the geothermal probe (80).

10. Method according to claim 9,
**characterized in that**
the introduction of the measuring probe (10) and the cable (20) into the guide tube (30) is only implemented after the guide tube (30) has been sunk into the borehole (90).

11. Method according to claim 10,
**characterized in that**
during the filling of the borehole (90) a height adjustment of the measuring probe (10) in the borehole (90) is implemented and
**in that** the height adjustment of the measuring probe (10) is implemented relative to the guide tube (30).

12. Method according to claim 10 or 11,
**characterized in that**
during the filling of the borehole (90) the guide tube (30) is left in the borehole (90).

## Revendications

1. Dispositif de mesure pour la surveillance d'un colmatage d'un puits de forage (90) avec une suspension d'un matériau de construction,
avec une sonde de mesure (10) pour la détermination du colmatage dans le puits de forage (90),
avec un câble (20) pour soulever et abaisser la sonde de mesure (10),
avec un tube de guidage (30), dans lequel la sonde de mesure (10) et le câble (20) peuvent être guidés,
avec une sonde géothermique (80), qui comprend au moins une paire de tubes (81, 82), un fluide caloporteur pouvant être transporté au moyen de la paire de tubes (81, 82) en vue de l'échange de chaleur avec un milieu environnant, **caractérisé :**
**en ce qu'**un tambour de stockage (40) est prévu pour l'enroulement et/ou le déploiement du tube de guidage (30),
**en ce qu'**un tambour de câble est prévu pour l'enroulement et le déploiement du câble (20),
**en ce que** la sonde géothermique (80) est enroulée sur le tambour de stockage (40).

2. Dispositif de mesure selon la revendication 1,
**caractérisé :**
**en ce que** le tube de guidage (30) est relié à une paire de tubes (81, 82) de la sonde géothermique (80).

3. Dispositif de mesure selon la revendication 1 ou 2,
**caractérisé :**
**en ce que** le tube de guidage (30) comprend, le long de sa longueur, des orifices de fluide (31, 32) pour la mise en place d'une liaison fluidique entre une partie intérieure du tube de guidage (30) et un milieu environnant du tube de guidage (30).

4. Dispositif de mesure selon la revendication 3,
**caractérisé :**
**en ce que** les orifices de fluide (31, 32) sont formés par des trous de forage dans le tube de guidage (30).

5. Dispositif de mesure selon une des revendications 1 à 4,
**caractérisé :**
**en ce que** les orifices de fluide (31, 32) sont disposés en étant placés l'un par rapport à l'autre dans la direction périphérique du tube de guidage (30).

6. Dispositif de mesure selon une des revendications 2 à 5,
**caractérisé :**
**en ce qu'**une dimension de la section et une forme de la section du tube de guidage (30) et celles des tubes (81, 82) de la sonde géothermique (80) sont identiques.

7. Dispositif de mesure selon une des revendications 1 à 6,
**caractérisé :**
**en ce que** la sonde de mesure (10) comprend au moins un tronçon flexible.

8. Dispositif de mesure selon une des revendications 1 à 7,
**caractérisé :**
**en ce que** la sonde de mesure (10) partage une paroi avec un ou deux des tubes (81, 82) de la sonde géothermique (80) et forme ainsi un tube double ou un tube triple.

9. Procédé pour la réalisation d'un puits de forage colmaté,
selon lequel une suspension d'un matériau de construction est amenée dans un puits de forage (90),
selon lequel, pour la surveillance du colmatage d'un puits de forage (90) avec une suspension d'un matériau de construction, une sonde de mesure (10), qui est mise en place pour la détermination du colmatage, est introduite, fixée à un câble (20), dans le puits de forage (90),
selon lequel un tube de guidage (30) est descendu dans le puits de forage (90), selon lequel la sonde de mesure (10) et le câble (20) sont introduits à l'intérieur du tube de guidage (30) dans le puits de forage (90),
selon lequel, avant que la suspension d'un matériau de construction soit amenée, une sonde géothermique (80) est descendue dans le puits de forage (90), selon lequel la sonde géothermique (80) comprend au moins une paire de tubes (81, 82), au moyen desquels un fluide caloporteur peut être transporté en vue de l'échange de chaleur avec un milieu environnant,
**caractérisé :**
**en ce que** le tube de guidage (30) est descendu en même temps que la sonde géothermique (80).

10. Procédé selon la revendication 9,
**caractérisé :**
**en ce que** l'introduction de la sonde de mesure (10) et du câble (20) dans le tube de guidage (30) est effectuée seulement après une descente du tube de guidage (30) dans le puits de forage (90).

11. Procédé selon la revendication 10,
**caractérisé :**
**en ce que**, pendant le colmatage du puits de forage (90), un réglage en hauteur de la sonde de mesure (10) dans le puits de forage (90) est effectué, et
**en ce que** le réglage en hauteur de la sonde de mesure (10) est effectué par rapport au tube de guidage (30).

12. Procédé selon la revendication 10 ou 11,
**caractérisé :**
**en ce que**, pendant le colmatage du puits de forage (90), le tube de guidage (30) est laissé dans le puits de forage (90).
